Europäisches Patentamt

European Patent Office

Office européen des brevets

(11) Veröffentlichungsnummer: **0 242 787 B1**

# (12) EUROPÄISCHE PATENTSCHRIFT

(45) Veröffentlichungstag der Patentschrift: **07.10.92**

(21) Anmeldenummer: **87105599.2**

(22) Anmeldetag: **15.04.87**

(51) Int. Cl.⁵: **F24D 13/02**

(54) **Elektrische Fussbodenheizung.**

(30) Priorität: **17.04.86 DE 3613033**

(43) Veröffentlichungstag der Anmeldung:
**28.10.87 Patentblatt 87/44**

(45) Bekanntmachung des Hinweises auf die
Patenterteilung:
**07.10.92 Patentblatt 92/41**

(84) Benannte Vertragsstaaten:
**AT CH DE FR GB IT LI SE**

(56) Entgegenhaltungen:
**CH-A- 300 505**
**DE-A- 2 657 809**

(73) Patentinhaber: **Stadelmann, Karlheinz, Ing.
grad.
Watzmannstrasse 98
W-8210 Prien/Chiemsee(DE)**

(72) Erfinder: **Stadelmann, Karlheinz, Ing. grad.
Watzmannstrasse 98
W-8210 Prien/Chiemsee(DE)**

(74) Vertreter: **Michelis, Theodor, Dipl.-Ing. et al
Seibert + Michelis Rechtsanwälte und Patentanwälte Tattenbachstrasse 9
W-8000 München 22(DE)**

**Beschreibung**

Die Erfindung bezieht sich auf eine elektrische, auch nachträglich aufzubringende Flächenheizung, insbesondere Fußbodenheizung, mit durch Stromdurchgang elektrisch aufheizbaren Heizelementen, die in dem zum Anbringen von Fliesen oder Steinplatten auf die zu beheizende Fläche erforderlichen Haftmaterial verlegt sind.

Es ist bekannt, daß Fußboden- oder Flächenheizungen stark zur Energieeinsparung beitragen, weil beim Vorhandensein einer derartigen Heizung bei gleicher Behaglichkeit die Raumtemperatur um 2 bis 3°C gesenkt werden kann. Dies ist nicht nur für den einzelnen Verbraucher von besonderer Bedeutung, sondern auch volkswirtschaftlich von hohem Interesse.

Unabhängig davon besteht schon aus Reinigungsgründen bei vielen Wohn- und Geschäftsräumen der Wunsch, einen keramischen Bodenbelag aus Fliesen, Kacheln, Steinplatten usw. vorzusehen. Ein derartiger Bodenbelag hat den Vorteil einer hohen Lebensdauer, einer leichten Pflege und einer leichten Reinhaltung. Darüberhinaus ist er hygienisch und im allgemeinen auch als ästhetisch anzusehen. Der Nachteil derartiger Bodenbeläge besteht darin, daß er nur einen geringen Wärmeübergangswiderstand zu den Füßen aufweist, der wesentlich geringer ist als der Wärmeübergangswiderstand zu Holz- oder Teppichböden. Aus diesem Grund werden solche Beläge oft als fußkalt empfunden.

Es ist bekannt, auch derartige Böden mit einer Heizung auszustatten, um diesen Nachteil auszugleichen. Hierzu reichen Heizungen aus, die die Oberflächentemperatur des Bodens auf etwa +20°C aufheizen, um das Gefühl von Fußkälte zu vermeiden.

Es ist in diesem Zusammenhang aus der CH-A-300 505 eine Oberflächenheizung bekanntgeworden, bei der der Heizkörper aus einem Drahtgeflecht besteht, das als Einlage in nicht-metallischer Baustoffschichtung angeordnet ist. Mit einem solchen Drahtgeflecht können wie bei einer Heizmatte nur regelmäßig geformte Flächen ausgelegt werden, wobei insbesondere in ausgesparten Eckbereichen die Heizleistung sehr stark nachläßt und daher dort einen gesonderten, aufwendigen Stromanschluß erfordert.

Erhebliche Schwierigkeiten entstehen jedoch auch, wenn eine Fußbodenheizung nachträglich in einem Raum eines schon bestehenden Gebäudes mit vorhandenem Estrich verlegt werden soll, da die erforderliche Erhöhung der Fußbodenoberkante wegen vorhandener Türen oder der sich ergebenden Schwellen zu anderen Räumen nicht möglich ist. Im allgemeinen ist nur ein Spielraum von ca. 1 cm für Teppich, Fliesen oder ähnliche Fußbodenbeläge vorgesehen. Dies reicht aber für einen Belag mit Fußbodenheizung nicht aus, wenn z.B. eine Warmwasserheizung verwendet werden soll, die eine Höhe bis zu 7 cm benötigt. Es bleibt dann nur die Möglichkeit, den vorhandenen Estrich herauszunehmen und durch einen neuen zu ersetzen, in den dann die Fußbodenheizung miteingebaut wird. Davor scheuen viele Hausbesitzer zurück, abgesehen davon, daß hier eine nicht unerhebliche Staub- und Lärmbelästigung gegeben werden.

Alle diese Nachteile haben bis heute verhindert, daß Fußbodenheizungen im großen Umfang in schon bestehende Gebäude installiert werden.

Gerade aber in Altbauten mit den im allgemeinen sehr viel höheren Räumen wäre es sinnvoll, Fußbodenheizungen zu betreiben, da in fußkalten Räumen die Raumtemperatur unbewußt höher eingestellt wird (bis +25°C), um Behaglichkeit zu erzielen. Wird der Fußboden beheizt (z.B. auf +20°C), so ist eine um 2 bis 3°C niedrigere Raumtemperatur für die Behaglichkeit absolut ausreichend. Dies führt dann zu einer erheblichen Energieeinsparung.

Der vorliegenden Erfindung liegt daher die Aufgabe zugrunde, eine Flächenheizung zu schaffen, die auch nachträglich auf bereits fertigem Estrich verlegt werden kann und die unter Vermeidung des Erfordernisses einer zusätzlichen Bauhöhe eine schnelle und spannungsfreie Wärmeabgabe unter Aufrechterhaltung einer ununterbrochenen Flächenbindung zwischen aufzubringenden Fliesen oder Steinplatten und der zu beheizenden Fläche garantiert und die darüberhinaus auch leicht an schwer zugänglichen oder unregelmäßig geformten Flächen verlegt werden kann.

Zur Lösung dieser Aufgabe ist erfindungsgemäß vorgesehen, daß als Heizelemente einzelne, in individuellen Schlaufen mit beliebigem Abstand frei geführte Heizdrähte mit einem Durchmesser von ca. 1 mm in den als Haftmaterial verwendeten Fliesen- oder Plattenkleber derart eingelegt sind, daß sie von dem Kleber allseitig umschlossen sind. Bei der elektrischen Flächenheizung nach der Erfindung werden handelsübliche Keramik- oder Steinfliesen als Belag auf die zu beheizende Fläche oder als Bodenbelag auf den Estrich geklebt und die Heizdrähte für die Heizung vor dem Aufbringen dieser Fliesen in den für das Kleben notwendigen Kleber eingelegt. Wegen des geringen Durchmessers der Heizdrähte in Form handelsüblicher Kupferlackdrähte ist eine zusätzliche Bauhöhe für diese Flächenheizung nicht erforderlich.

Die Heizdrähte sind dabei so eingebettet, daß sich bei einem Stromfluß in den Heizdrähten und deren Erwärmung die entstehende Wärme über den gut wärmeleitenden Fliesenkleber unmittelbar auf den Wand- und Bodenbelag und insbesondere auch über die dahinterliegende Wand bzw. den Estrich übertragen, so daß die gesamte Fläche in etwa gleichmäßig erwärmt wird. Selbst verwinkelte Räume und Nischen können durch diese individuelle Verlegungsart ohne Probleme gleichmäßig beheizt werden.

Gemäß einer vorteilhaften Weiterbildung des Erfindungsgedankens werden dabei im Bereich erhöhten Wärmebedarfs mehrere Leiter parallel zueinander verlegt. Dabei können bei Verlegen mehrerer Leiter diese bifilar eingelegt und entsprechend an die Versorgungsstromquelle angeschlossen sein.

Praktische Erfahrungen haben gezeigt, daß die Lackisolierung der gemäß der Erfindung zu verwendenden Heizdrähte voll ausreicht, irgendeinen Spannungsübergang vom Inneren der Drähte auf die Fußbodenoberseite zu vermeiden. Dabei dient der Lacküberzug auch dazu, Druckspannungen, die beim Erwärmen der einzelnen Leiter entstehen, auszugleichen, ohne daß auf den Kleber irgendein die Haltbarkeit beeinflussender Druck ausgeübt würde.

Dies bedeutet, daß die Fußbodenheizung an sich ohne weiteres unmittelbar an das Stromnetz angeschlossen werden kann. Aus Sicherheitsgründen kann dabei gemäß einer anderen Weiterbildung der Erfindung allerdings auch ein FI-Schutzschalter vorgesehen werden, der beim Auftreten auch eines nur geringen Leckstromes, der im Grenzfall durch Beschädigung der Lackoberfläche entstehen könnte, die Heizung sicher abschaltet.

Dabei ist zu berücksichtigen, daß die einmal eingebetteten Drähte keiner mechanischen Berührung ausgesetzt sind, so daß Lackschäden praktisch nicht auftreten können.

Gemäß einer weiteren Ausgestaltung der Erfindung ist es aber auch möglich, die Heizdrähte an eine Kleinspannungsquelle, insbesondere an die Sekundärseite eines Kleinspannungstransformators mit einer Spannung von maximal 50 Volt anzuschließen, wodurch von vornherein irgendeine Gefährdung durch Federströme ausgeschlossen ist.

Dabei können in an sich bekannter Weise in den Heizstromkreis Temperaturfühler, wie Bimetallstreifen usw., aber auch Strom- und Spannungsregler in Form von Regeltransformatoren, aber auch Tyristoren usw., eingesetzt werden. Dabei kann davon ausgegangen werden, daß in aller Regel wegen des guten Wärmekontaktes des allseitig vom Kleber umschlossenen Kupferdrahtes und die dadurch schnelle Wärmeabgabe an den Bodenbelag selbst die Temperatur der Drähte im Heizbetrieb nur ca. 5°C höher ist als die Fußbodentemperatur selbst.

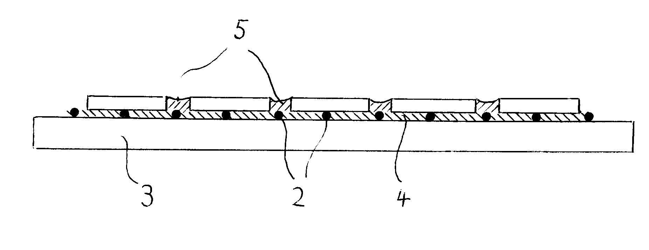

Die erfindungsgemäßen Maßnahmen werden im folgenden in Verbindung mit der Zeichnung nochmals zusammengefaßt. In der Zeichnung zeigt die einzige Figur einen Fußbodenabschnitt mit einer elektrischen Heizung, die gemäß der Erfindung eingerichtet ist.

In der Figur ist mit 3 der schwimmende Estrich eines Fußbodens bezeichnet, auf dem gemäß der Erfindung zunächst keramische Platten 1 aufgeklebt werden. Dabei sind in den Fliesenkleber 4 elektrische Leiter 2 eingelegt, wodurch die Höhe des Fliesenbelages praktisch nicht beeinflußt wird. Die vorliegende Erfindung wurde im besonderen in Verbindung mit einer Fußbodenheizung erläutert, da dieser Anwendungsfall für den Architekten von besonderem Interesse ist. Der Fachmann ersieht aber, daß in ganz gleicher Weise auch Wandflächen, die mit Fliesen versehen werden, sowie auch andere Flächen, z.B. auch die Abstrahlfläche eines Kachelofens, und insbesondere auch gekrümmte Flächen nachträglich mit einer Heizung versehen werden können, wenn die Maßnahmen nach der vorliegenden Erfindung angewendet werden. In jedem Fall ist der Vorteil gegeben, daß das Behaglichkeitsgefühl einer Person in einem Raum erhöht wird, selbst bei geringeren Raumtemperaturen, was wiederum zu erheblicher Energieeinsparung führt.

## Patentansprüche

1. Elektrische, auch nachträglich aufzubringende Flächenheizung, insbesondere Fußbodenheizung, mit durch Stromdurchgang elektrisch aufheizbaren Heizelementen, die in dem zum Anbringen von Fliesen oder Steinplatten auf die zu beheizende Fläche erforderlichen Haftmaterial verlegt sind, dadurch gekennzeichnet, daß als Heizelemente einzelne, in individuellen Schlaufen mit beliebigem Abstand frei geführte Heizdrähte (2) mit einem Durchmesser von ca. 1 mm in den als Haftmaterial verwendten Fliesen- oder Plattenkleber (4) derart eingelegt sind, daß sie von dem Kleber (4) allseitig umschlossen sind.

2. Elektrische Flächenheizung nach Anspruch 1, dadurch gekennzeichnet, daß im Bereich erhöhten Wärmebedarfs mehrere Leiter parallel zueinander verlegt sind.

3. Elektrische Flächenheizung nach Anspruch 2, dadurch gekennzeichnet, daß bei Verlegen mehrerer Leiter diese bifilar eingelegt und entsprechend an die Versorgungsstromquelle angeschlossen sind.

4. Elektrische Flächenheizung nach einem der vorhergehenden Ansprüche, dadurch gekennzeichnet, daß die Heizdrähte von einer Kleinspannungsquelle, insbesondere der Sekundärseite eines Kleinspannungstransformators, mit einer Spannung von maximal 50 Volt angeschlossen sind.

5. Elektrische Flächenheizung nach einem der Ansprüche 1 bis 3, dadurch gekennzeichnet, daß die Heizdrähte an die Netzspannung angeschlossen sind und der Stromfluß über einen FI-Schutzschalter geführt ist.

6. Elektrische Flächenheizung nach einem der Ansprüche 1 bis 5, gekennzeichnet durch die Kombination mit einem an sich bekannten Temperaturregler mit Wärmefühler zur Steuerung des Heizstromes.

7. Verfahren zum Anbringen einer Flächenheizung nach einem der Ansprüche 1 bis 6 auf herkömmlichen, bautechnisch fertigen Wänden oder Böden, dadurch gekennzeichnet, daß auf die mit der Heizung zu versehende Fläche, z.B. auf dem Estrich eines Bodens, ein Fliesen- oder Steinplattenkleber aufgebracht, in diesen die Heizdrähte eingelegt und auf diesen Kleber Fliesen oder Steinplatten aufgelegt werden.

## Claims

1. Electric panel heating, in particular underfloor heating, which is also retroactively installable, having heating elements which are electrically heatable by current passage and are laid in the adhesive material required to install floor tiles or flagstones on the surface area to be heated, characterized in that, as heating elements, individual heating wires (2) having a diameter of around 1 mm and running freely in randomly spaced individual loops are inserted into the tile or flagstone bonding agent (4) used as an adhesive material in such a way that said wires are surrounded on all sides by the bonding agent (4).

2. Electric panel heating according to claim 1, characterized in that in the region of increased heat requirement a plurality of conductors are laid parallel to one another.

3. Electric panel heating according to claim 2, characterized in that, when laying a plurality of conductors, said conductors are inserted in a bifilar manner and are correspondingly connected to the power supply source.

4. Electric panel heating according to one of the preceding claims, characterized in that the heating wires are connected by an extra-low-voltage source, in particular the secondary side of an extra-low-voltage transformer, with a voltage of, at most, 50 volts.

5. Electric panel heating according to one of claims 1 to 3, characterized in that the heating wires are connected to the mains voltage and the current flow is conveyed via a residual-current-operated circuit-breaker.

6. Electric panel heating according to one of claims 1 to 5, characterized by combination with a known thermostat with a temperature sensor for controlling the heating current.

7. Method of installing panel heating according to one of claims 1 to 6 on conventional, structurally finished walls or floors, characterized in that a floor tile or flagstone bonding agent is applied onto the surface area to be provided with the heating, e.g. onto the screed of a floor, and the heating wires are inserted into said bonding agent and floor tiles or flagstones are laid on top of said bonding agent.

## Revendications

1. Dispositif de chauffage électrique en surface, notamment dispositif de chauffage par le sol, pouvant être également installé ultérieurement et comportant des éléments chauffants pouvant être chauffés électriquement par le passage d'un courant et qui sont disposés dans la matière adhésive nécessaire à la pose de carreaux ou de dalles en pierre sur la surface devant être chauffée, caractérisé par le fait des fils chauffants (2), disposés librement selon des boucles individuelles à des distances quelconques et d'un diamètre d'environ 1 mm, sont insérés, comme éléments chauffants, dans la colle (4) utilisée comme matière adhésive pour les carreaux ou les dalles en pierre, de manière à entourer les fils de tout côté par la colle (4).

2. Dispositif de chauffage électrique en surface suivant la revendication 1, caractérisé par le fait que plusieurs conducteurs sont disposés parallèlement les uns aux autres dans la zone ayant besoin de plus de chaleur.

3. Dispositif de chauffage électrique en surface suivant la revendication 2, caractérisé par le fait que, dans le cas de la pose de plusieurs conducteurs, ces derniers sont insérés sous forme bifilaire et sont raccordés de façon correspondante à la source de courant d'alimentation.

4. Dispositif de chauffage électrique en surface suivant l'une des revendications précédentes, caractérisé par le fait que les fils chauffants sont raccordés à une source de faible tension, notamment au côté secondaire d'un transformateur de faible tension, ayant une tension égale au maximum à 50 volt.

5. Dispositif de chauffage électrique en surface suivant l'une des revendications 1 à 3, caractérisé par le fait que les fils chauffants sont raccordés à la tension du réseau et que le flux de courant est transmis par l'intermédiaire d'un interrupteur de protection FI.

6. Dispositif de chauffage électrique en surface suivant l'une des revendications 1 à 5, caractérisé par sa combinaison avec un régulateur de température, connu en soi comportant un capteur thermique pour commander le courant de chauffage.

7. Procédé de pose d'un dispositif de chauffage en surface suivant l'une des revendications 1 à 6 sur des murs ou des sols usuels, finis de construction, caractérisé par le fait que sur la surface à munir du dispositif de chauffage, par exemple sur la chape d'un sol, on dépose une colle pour carreaux ou dalles, on insère les fils chauffants dans cette colle et on pose des carreaux ou des dalles sur cette colle.